(19) Europäisches Patentamt / European Patent Office / Office européen des brevets

(11) **EP 1 916 450 A1**

(12) **EUROPEAN PATENT APPLICATION**
published in accordance with Art. 153(4) EPC

(43) Date of publication:
**30.04.2008 Bulletin 2008/18**

(51) Int Cl.:
*F16H 55/36* (2006.01)     *F16C 21/00* (2006.01)
*B66B 7/06* (2006.01)

(21) Application number: **05780440.3**

(22) Date of filing: **19.08.2005**

(86) International application number:
**PCT/JP2005/015129**

(87) International publication number:
**WO 2007/020705 (22.02.2007 Gazette 2007/08)**

(84) Designated Contracting States:
**DE**

(71) Applicant: **MITSUBISHI DENKI KABUSHIKI KAISHA**
**Chiyoda-ku, Tokyo 100-8310 (JP)**

(72) Inventor: **ANDO, Eiji**
**Tokyo 100-8310 (JP)**

(74) Representative: **HOFFMANN EITLE**
**Patent- und Rechtsanwälte**
**Arabellastrasse 4**
**81925 München (DE)**

(54) **DEFLECTION SHEAVE DEVICE**

(57)     In a deflection pulley apparatus, a main bearing is fitted over a shaft. A main pulley is fitted over the main bearing. The main pulley has a cylindrical portion that is disposed coaxially with the shaft so as to surround the shaft. A subsidiary pulley is disposed on an outer portion of the cylindrical portion. The subsidiary pulley is rotatable around the shaft and also rotatable relative to the main pulley. Rope bodies are wound around the main pulley and the subsidiary pulley.

FIG. 1

EP 1 916 450 A1

Printed by Jouve, 75001 PARIS (FR)

**Description**

TECHNICAL FIELD

The present invention relates to a deflection pulley apparatus that is used in an elevator, for example, and that deflects a plurality of rope bodies that are wound around it.

BACKGROUND ART

In conventional elevator car sheaves, a plurality of sheave pieces that have different effective diameters from each other are supported by a shared spindle. Bearings are interposed between each of the sheave pieces and the spindle, making each of the sheave pieces independently rotatable (see Patent Literature 1, for example).
Patent Document 1: Japanese Patent Laid-Open No. HEI 7-61745

DISCLOSURE OF THE INVENTION

PROBLEM TO BE SOLVED BY THE INVENTION

However, in conventional car sheaves such as those described above, if rolling bearings are used for the bearings, overall sheave width dimensions are increased, since bearing width is increased. If sliding bearings are used, although width dimensions are reduced, the bearings cannot withstand high-speed rotation and can only be applied to low-speed elevators such as hydraulic elevators, etc.
The present invention aims to solve the above problems and an object of the present invention is to provide a deflection pulley apparatus that reduces width dimensions while also being able to cope with high-speed rotation.

MEANS FOR SOLVING THE PROBLEM

In order to achieve the above object, according to one aspect of the present invention, there is provided a deflection pulley apparatus including: a shaft; a main bearing that is fitted over the shaft; a main pulley having a cylindrical portion that is disposed coaxially with the shaft so as to surround the shaft, the main pulley being fitted over the main bearing; and a subsidiary pulley that is disposed on an outer portion of the cylindrical portion, and that is rotatable around the shaft and also rotatable relative to the main pulley.
According to another aspect of the present invention, there is provided a deflection pulley apparatus including: a shaft; a main bearing that is fitted over the shaft; a boss that is disposed coaxially with the shaft so as to surround the shaft, the boss being fitted over the main bearing; a plurality of subsidiary pulleys that are disposed on an outer portion of the boss, and that are rotatable around the shaft and also rotatable relative to the boss; and a plurality of subsidiary bearings that are respectively disposed between the boss and the subsidiary pulleys, the main bearing being a rolling bearing, and the subsidiary bearings being sliding bearings.

BRIEF DESCRIPTION OF THE DRAWINGS

Figure 1 is a front elevation showing a deflection pulley apparatus according to Embodiment 1 of the present invention partially sectioned;
Figure 2 is a front elevation showing a deflection pulley apparatus according to Embodiment 2 of the present invention partially sectioned;
Figure 3 is a front elevation showing a deflection pulley apparatus according to Embodiment 3 of the present invention partially sectioned;
Figure 4 is a front elevation showing a deflection pulley apparatus according to Embodiment 4 of the present invention partially sectioned;
Figure 5 is a front elevation showing a deflection pulley apparatus according to Embodiment 5 of the present invention partially sectioned; and
Figure 6 is a front elevation showing a deflection pulley apparatus according to Embodiment 6 of the present invention partially sectioned.

BEST MODE FOR CARRYING OUT THE INVENTION

Preferred embodiments of the present invention will now be explained with reference to the drawings.

Embodiment 1

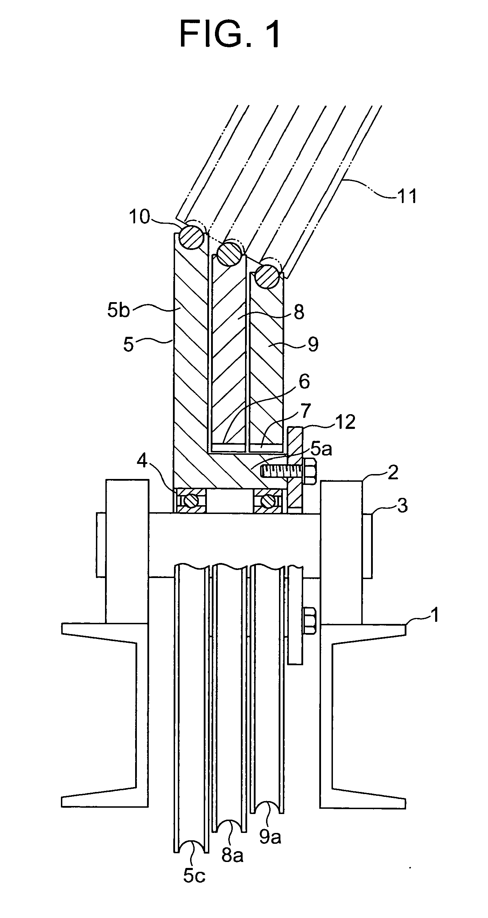

Figure 1 is a front elevation showing a deflection pulley apparatus according to Embodiment 1 of the present invention partially sectioned, and in this case a deflection pulley apparatus used in a traction elevator is shown as an example.

In the figure, a pair of mounting beams 1 are installed in a hoistway or a machine room, or on a car or a counterweight, for example. A pair of bearing mounts 2 are fixed to the mounting beams 1. A shaft 3 is supported by the bearing mounts 2.

A pair of main bearings 4 are fitted over the shaft 3. The main bearings 4 are disposed so as to be spaced apart from each other in an axial direction of the shaft 3. Rolling bearings are used for the main bearings 4. A main pulley 5 is fitted over the main bearings 4. In other words, the main bearings 4 are interposed between the shaft 3 and the main pulley 5 such that the main pulley 5 is rotatable around the shaft 3.

The main pulley 5 includes: a cylindrical portion 5a that is disposed coaxially with the shaft 3 so as to surround the shaft 3; and a main pulley main body 5b that is disposed on a first axial end portion of the cylindrical portion 5a. A groove 5c is disposed on an outer portion of the main pulley main body 5b.

First and second subsidiary bearings 6 and 7 are fitted over an outer portion of the cylindrical portion 5a so as to be lined up axially. Sliding bearings are used for the first and second subsidiary bearings 6 and 7.

A first subsidiary pulley 8 is fitted over the first subsidiary bearing 6. A second subsidiary pulley 9 is fitted over the second subsidiary bearing 7. The first and second subsidiary pulleys 8 and 9 are rotatable around the shaft 3, and each is independently rotatable relative to the main pulley 5. Grooves 8a and 9a are disposed on outer portions of the first and second subsidiary pulleys 8 and 9.

Rope bodies 10 are wound around the main pulley 5 and the subsidiary pulleys 8 and 9 so as to be inserted into the grooves 5c, 8a, and 9a. In this example, the rope bodies 10 are constituted by elevator ropes such as main ropes, etc., and are consecutively wound around a deflection pulley 11 whose rotating shaft is not parallel to the shaft 3.

Effective diameters of the main pulley 5 and the subsidiary pulleys 8 and 9 (i.e., diameters at the grooves 5c, 8a, and 9a) differ from each other. Thus, approach angles of the rope bodies 10 onto the main pulley 5 and the subsidiary pulleys 8 and 9 are prevented from increasing. A disk-shaped stopper 12 that prevents the subsidiary pulleys 8 and 9 from dislodging is fixed to a second axial end portion of the cylindrical portion 5a using bolts.

Now, if we let the effective diameter of the main pulley 5 be $D_m$ and the effective diameters of the first and second subsidiary pulleys 8 and 9 be $D_{C1}$ and $D_{C2}$, respectively, and if we let a feed speed of the rope bodies 10 be V, then rotational frequency $\omega_m$ of the main pulley 5 and rotational frequencies $\omega_{C1}$ and $\omega_{C2}$ of the subsidiary pulleys 8 and 9 can be expressed as follows:

$$\omega_m \; = \; V / (\pi \cdot D_m)$$

$$\omega_{C1} \; = \; V / (\pi \cdot D_{C1})$$

$$\omega_{C2} \; = \; V / (\pi \cdot D_{C2})$$

Rotational frequency $\omega_{Bm}$ of the main bearings 4 and rotational frequencies $\omega_{B1}$ and $\omega_{B2}$ of the subsidiary bearings 6 and 7 can be expressed as follows:

$$\omega_{Bm} \; = \; \omega_m$$

$$\omega_{B1} \ = \ \omega_{C1} \ - \ \omega_m$$

$$\omega_{B2} \ = \ \omega_{C2} \ - \ \omega_m$$

For example, if V = 120 m/min, $D_m$ = 0.56 m, $D_{C1}$ = 0.54 m, and $D_{C2}$ = 0.52 m, then the rotational frequencies of the main pulley 5 and the subsidiary pulleys 8 and 9 can be found as follows:

$$\omega_m \ = \ 120/(\pi \cdot 0.56) \ = \ 68.2 \ \text{rpm}$$

$$\omega_{C1} \ = \ 120/(\pi \cdot 0.54) \ = \ 70.7 \ \text{rpm}$$

$$\omega_{C2} \ = \ 120/(\pi \cdot 0.52) \ = \ 73.4 \ \text{rpm}$$

The rotational frequency of the main bearings 4 and the rotational frequencies of the subsidiary bearings 6 and 7 can be found as follows:

$$\omega_{Bm} \ = \ 68.2 \ \text{rpm}$$

$$\omega_{B1} \ = \ 70.7 \ - \ 68.2 \ = \ 2.5 \ \text{rpm}$$

$$\omega_{B2} \ = \ 73.4 \ - \ 68.2 \ = \ 5.2 \ \text{rpm}$$

Thus, the rotational frequencies of the subsidiary bearings 6 and 7 are extremely small compared to the rotational frequency of the main bearings 4. In other words, the rotational speeds of the subsidiary bearings 6 and 7 relative to the cylindrical portion 5a are slow even if the main pulley 5 and the subsidiary pulleys 8 and 9 rotate at high speed.

The rotational frequency of the main bearings 4 is approximately equal to the rotational frequency of conventional deflection pulleys in which subsidiary pulleys are not separated from a main pulley. Dimensions for mounting the main bearings 4 are also similar to those of conventional deflection pulleys. Thus, conventional deflection pulley rolling bearings can also be used for the main bearings 4 without modification.

In addition, the main bearings 4 are chosen based on acting load, rotational frequency, frequency of activation, and desired service life, and rolling bearings, which are advantageous with regard to service life, are used for the main bearings 4 in a traction elevator since traveling speed is high and frequency of activation is also high.

On the other hand, sliding bearings, which are superior with regard to mounted dimensions, can be used instead of rolling bearings for the subsidiary pulleys 8 and 9 since the rotational frequencies of the subsidiary pulleys 8 and 9 are sufficiently small.

In a deflection pulley apparatus of this kind, because a cylindrical portion 5a is disposed on the main pulley 5 and subsidiary pulleys 8 and 9 rotate relative to the cylindrical portion 5a, differing types of the bearings can be used for the main bearings 4 and for the subsidiary bearings 6 and 7, enabling width dimensions to be reduced while also being able to cope with high-speed rotation.

In particular, because rolling bearings are used for the main bearings 4 and sliding bearings are used for the subsidiary bearings 6 and 7, width dimensions can be reduced efficiently while sufficiently ensuring service life relative to high-speed rotation.

Because the effective diameter of the main pulley 5 and the effective diameters of the subsidiary pulleys 8 and 9 differ from each other, even if a deflection pulley 11 whose rotating shaft is not parallel is disposed adjacently, the rope bodies 10 enter parallel to the grooves 5c, 8a, and 9a, enabling wear and tear on the rope bodies 10 and the grooves 5c, 8a, and 9a, etc., to be suppressed.

Embodiment 2

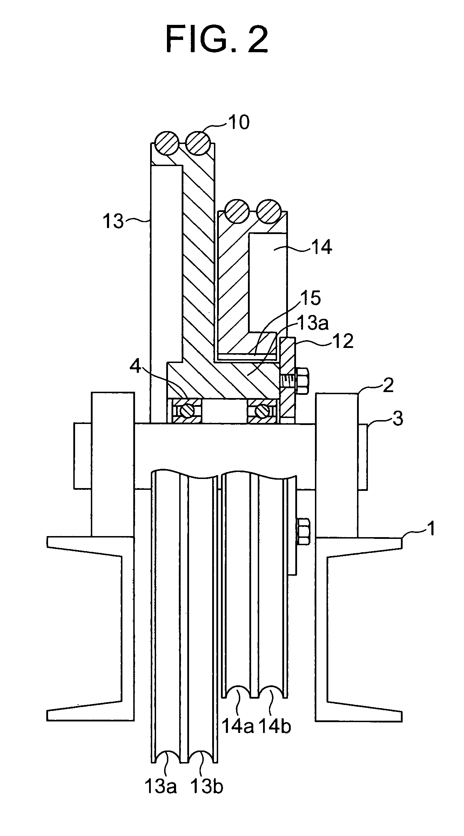

Next, Figure 2 is a front elevation showing a deflection pulley apparatus according to Embodiment 2 of the present invention partially sectioned. In Embodiment 1, single grooves 5c, 8a, and 9a were disposed on the main pulley 5 and the subsidiary pulleys 8 and 9, but in this example a main pulley 13 having two grooves 13a and 13b and a subsidiary pulley 14 having two grooves 14a and 14b are used. A subsidiary bearing 15 that is constituted by a sliding bearing is disposed between a cylindrical portion 13c of the main pulley 13 and the subsidiary pulley 14. The rest of the configuration is similar to that of Embodiment 1.

In a deflection pulley apparatus of this kind, because the effective diameter of the subsidiary pulley 14 and the effective diameter of the main pulley 13 differ from each other, the approach angles of the rope bodies 10 onto the grooves 13a, 13b, 14a, and 14b can be reduced even if a deflection pulley whose rotating shaft is not parallel is disposed adjacently, enabling wear and tear on the rope bodies 10 and the grooves 13a, 13b, 14a, and 14b to be suppressed. Because a plurality of grooves 13a, 13b, 14a, and 14b are disposed on the main pulley 13 and the subsidiary pulley 14, respectively, the number of parts is reduced, enabling productivity to be improved.

Embodiment 3

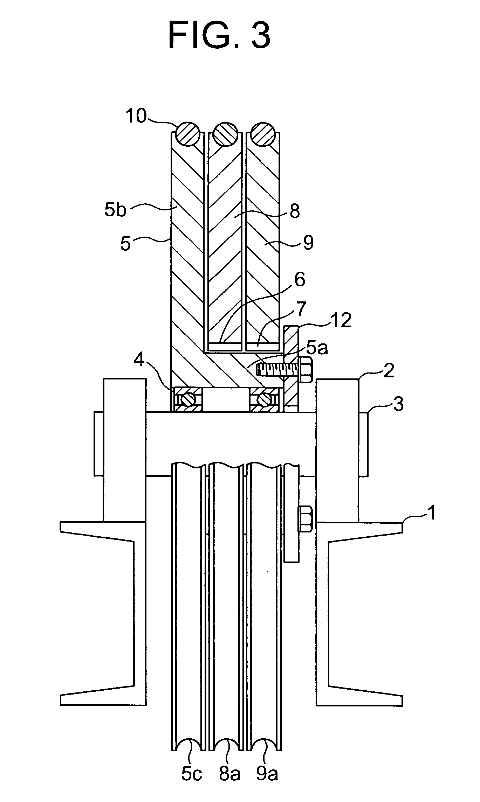

Next, Figure 3 is a front elevation showing a deflection pulley apparatus according to Embodiment 3 of the present invention partially sectioned. In this example, effective diameters of a main pulley 5 and subsidiary pulleys 8 and 9 are identical. The rest of the configuration is similar to that of Embodiment 1.

In a deflection pulley apparatus of this kind, wear and tear on the rope bodies 10 and the grooves 5c, 8a, and 9a due to differences in the effective diameters of the deflection pulleys (including the drive sheave) resulting from manufacturing irregularities, inadequate tension adjustment of the rope bodies 10, etc., can be suppressed. In this case, since the rotational frequencies of the subsidiary bearing 6 and 7 relative to the cylindrical portion 5a are small enough to be practically ignored, it is also possible for the subsidiary pulleys 8 and 9 to be fitted over the cylindrical portion 5a directly without using sliding bearings for the subsidiary bearings 6 and 7, with only a lubricant such as grease, etc. , disposed between the subsidiary pulleys 8 and 9 and the cylindrical portion 5a.

Embodiment 4

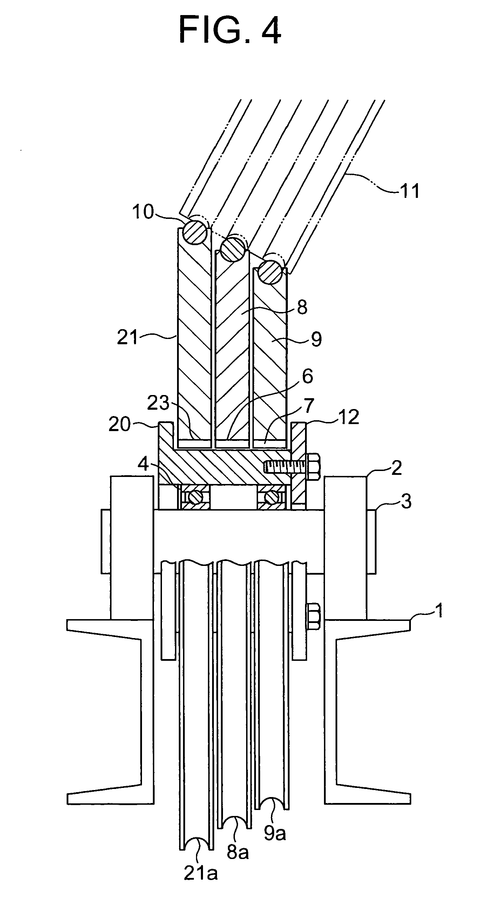

Next, Figure 4 is a front elevation showing a deflection pulley apparatus according to Embodiment 4 of the present invention partially sectioned. In the figure, a cylindrical boss 20 is fitted over main bearings 4 that are constituted by rolling bearings. The boss 20 is disposed coaxially with a shaft 3 so as to surround the shaft 3, and is rotatable around the shaft 3.

A plurality of subsidiary pulleys 8, 9, and 21 are disposed on an outer portion of the boss 20. The subsidiary pulleys 8, 9, and 21 are rotatable around the shaft 3, and each is independently rotatable relative to the boss 20. Grooves 8a, 9a, and 21a are disposed on outer portions of the subsidiary pulleys 8, 9, and 21. Subsidiary bearing 6, 7, and 23 are disposed between the boss 20 and the respective subsidiary pulleys 8, 9, and 21. Sliding bearings are used for each of the subsidiary bearings 6, 7, and 23. The rest of the configuration is similar to that of Embodiment 1.

In a deflection pulley apparatus of this kind, because the main bearings 4 that are constituted by rolling bearings are disposed between the shaft 3 and the boss 20, and the subsidiary bearings 6, 7, and 23 that are constituted by sliding bearings are disposed between the boss 20 and the subsidiary pulleys 8, 9, and 21, width dimensions can be reduced while also being able to cope with high-speed rotation.
Because the effective diameters of the subsidiary pulleys 8, 9, and 21 differ from each other, even if a deflection pulley 11 whose rotating shaft is not parallel is disposed adjacently, the rope bodies 10 enter parallel to the grooves 8a, 9a, and 21a, enabling wear and tear on the rope bodies 10 and the grooves 8a, 9a, and 21a, etc., to be suppressed.

Embodiment 5

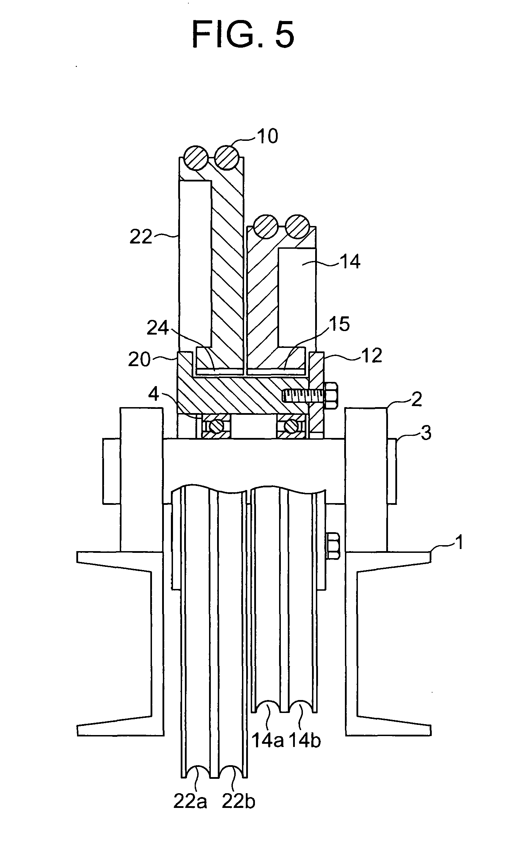

Next, Figure 5 is a front elevation showing a deflection pulley apparatus according to Embodiment 5 of the present invention partially sectioned. In Embodiment 4, single grooves 8a, 9a, and 21a were disposed on the subsidiary pulleys 8, 9, and 21, but in this example a subsidiary pulley 14 having two grooves 14a and 14b and a subsidiary pulley 22 having two grooves 22a and 22b are used. Subsidiary bearings 15 and 24 that are constituted by sliding bearings are disposed between a boss portion 20 and the subsidiary pulleys 14 and 22. The rest of the configuration is similar to that of Embodiment 4.

In a deflection pulley apparatus of this kind, because the effective diameters of the subsidiary pulleys 14 and 22 differ from each other, the approach angles of the rope bodies 10 onto the grooves 14a, 14b, 22a, and 22b can be reduced even if a deflection pulley whose rotating shaft is not parallel is disposed adjacently, enabling wear and tear on the rope bodies 10 and the grooves 14a, 14b, 22a, and 22b to be suppressed. Because a plurality of grooves 14a, 14b, 22a, and 22b are disposed on the subsidiary pulleys 14 and 22, respectively, the number of parts is reduced, enabling productivity to be improved.

Embodiment 6

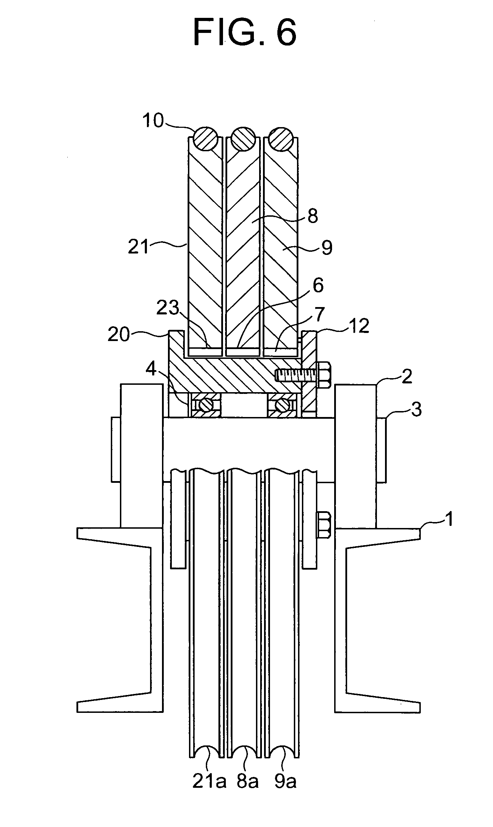

Next, Figure 6 is a front elevation showing a deflection pulley apparatus according to Embodiment 6 of the present invention partially sectioned. In this example, effective diameters of subsidiary pulleys 8, 9, and 21 are identical. The rest of the configuration is similar to that of Embodiment 4.

In a deflection pulley apparatus of this kind, wear and tear on the rope bodies 10 and the grooves 8a, 9a, and 21a due to differences in the effective diameters of the deflection pulleys (including the drive sheave) resulting from manufacturing irregularities, inadequate tension adjustment of the rope bodies 10, etc., can be suppressed. In this case, since the rotational frequencies of the subsidiary bearing 6, 7, and 23 relative to the boss portion 20 are small enough to be practically ignored, it is also possible for the subsidiary pulleys 8, 9, and 21 to be fitted over the boss portion 20 directly without using sliding bearings for the subsidiary bearings 6, 7, and 23, with only a lubricant such as grease, etc., disposed between the subsidiary pulleys 8, 9, and 21 and the boss portion 20.

Moreover, in the above examples, a deflection pulley apparatus used in a traction elevator has been explained, but a deflection pulley apparatus according to the present invention may also be applied to devices other than elevators.

**Claims**

1. A deflection pulley apparatus comprising:

    a shaft;
    a main bearing that is fitted over the shaft;
    a main pulley having a cylindrical portion that is disposed coaxially with the shaft so as to surround the shaft, the main pulley being fitted over the main bearing; and
    a subsidiary pulley that is disposed on an outer portion of the cylindrical portion, and that is rotatable around the shaft and also rotatable relative to the main pulley.

2. The deflection pulley apparatus according to Claim 1, further comprising a subsidiary bearing that is disposed between the cylindrical portion and the subsidiary pulley,
    the main bearing being a rolling bearing, and the subsidiary bearing being a sliding bearing.

3. The deflection pulley apparatus according to Claim 1, wherein an effective diameter of the main pulley and an effective diameter of the subsidiary pulley differ from each other.

4. A deflection pulley apparatus comprising:

    a shaft;
    a main bearing that is fitted over the shaft;
    a boss that is disposed coaxially with the shaft so as to surround the shaft, the boss being fitted over the main bearing;
    a plurality of subsidiary pulleys that are disposed on an outer portion of the boss, and that are rotatable around the shaft and also rotatable relative to the boss; and
    a plurality of subsidiary bearings that are respectively disposed between the boss and the subsidiary pulleys,
    the main bearing being a rolling bearing, and the subsidiary bearings being sliding bearings.

5. The deflection pulley apparatus according to Claim 4, wherein effective diameters of the subsidiary pulleys differ from each other.

EP 1 916 450 A1

# FIG. 1

7

# FIG. 2

# FIG. 3

# FIG. 4

# FIG. 5

# FIG. 6

**INTERNATIONAL SEARCH REPORT**

| International application No. |
|---|
| PCT/JP2005/015129 |

A. CLASSIFICATION OF SUBJECT MATTER
*F16H55/36*(2006.01), *F16C21/00*(2006.01), *B66B7/06*(2006.01)

According to International Patent Classification (IPC) or to both national classification and IPC

B. FIELDS SEARCHED

Minimum documentation searched (classification system followed by classification symbols)
*F16H55/36*(2006.01), *F16C21/00*(2006.01), *B66B7/06*(2006.01)

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 7-61745 A   (Otis Elevator Co.),<br>07 March, 1995 (07.03.95),<br>Full text<br>& US 5533595 A<br>full text<br>& EP 639526 A2<br>full text | 1-5 |
| A | Microfilm of the specification and drawings annexed to the request of Japanese Utility Model Application No. 156052/1982(Laid-open No. 61179/1984)<br>(Mitsubishi Electric Corp.),<br>21 April, 1984 (21.04.84),<br>Figs. 3 to 5<br>(Family: none) | 1-5 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>22 November, 2005 (22.11.05) | Date of mailing of the international search report<br>06 December, 2005 (06.12.05) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2005/015129

C (Continuation).   DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 169991/1988(Laid-open No. 91215/1990) (Bando Chemical Industries, Ltd.), 19 July, 1990 (19.07.90) Page 4, line 10 to page 5, line 13 (Family: none) | 1-5 |
| A | JP 62-41422 A  (Fumitaka HIROSAWA), 23 February, 1987 (23.02.87), Page 2, upper left column, line 19 to upper right column, line 6 (Family: none) | 1-5 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7061745 A